# EUROPÄISCHE PATENTSCHRIFT

(11) **EP 3 197 328 B1**
(45) Veröffentlichungstag und Bekanntmachung des Hinweises auf die Patenterteilung: **09.10.2019**
(21) Anmeldenummer: 15750762.5
(22) Anmeldetag: 18.08.2015
(51) Int. Cl.: A47J 31/60, B65D 85/804, A47J 31/44

(54) **GETRÄNKEAUTOMAT, INSBESONDERE KAFFEEMASCHINE, SOWIE VERFAHREN ZUM BETRIEB EINES SOLCHEN GETRÄNKEAUTOMATEN**
BEVERAGE VENDING MACHINE, IN PARTICULAR COFFEE MACHINE, AND METHOD FOR OPERATING SUCH A BEVERAGE VENDING MACHINE
DISTRIBUTEUR AUTOMATIQUE DE BOISSONS, EN PARTICULIER MACHINE À CAFÉ, ET PROCÉDÉ PERMETTANT DE FAIRE FONCTIONNER LEDIT DISPOSITIF AUTOMATIQUE DE BOISSONS

(30) Priorität: 23.09.2014 CH 14392014
(43) Veröffentlichungstag der Anmeldung: 02.08.2017
(73) Patentinhaber: Schaerer AG, 4528 Zuchwil (CH)
(72) Erfinder: EGLI, Peter, 3053 Münchenbuchsee (CH); AEBERHARD, Bruno, 4528 Zuchwil (CH); LÜSSI, André, 3303 Jengenstorf (CH)
(74) Vertreter: IPrime Rentsch Kaelin AG
(86) Internationale Anmeldenummer: PCT/EP2015/068948
(87) Internationale Veröffentlichungsnummer: WO 2016/045878

(56) Entgegenhaltungen:
- WO-A1-2012/010317
- WO-A1-2012/048728
- DE-A1-102007 019 425
- DE-A1-102011 081 010
- FR-A1- 2 873 011
- GB-A- 2 469 873
- GB-A- 2 506 940
- Anonymous: "Alfred Bertsch Espresso Point", , 17. Februar 2013 (2013-02-17), XP055163529, Internet Gefunden im Internet: URL:http://web.archive.org/web/20130217140 413/http://www.lavazza-point.de/sites/ep_p rodukte.php?id=3&PHPSESSID=h9apclqc25u0s1s 27laidp7bv4 [gefunden am 2015-01-20]

## Beschreibung

### TECHNISCHES GEBIET

Die vorliegende Erfindung bezieht sich auf das Gebiet der Getränkeautomaten, insbesondere Kaffeeautomaten. Sie betrifft einen Getränkeautomaten gemäss dem Oberbegriff des Anspruchs 1. Sie betrifft weiterhin ein Verfahren zum Betrieb eines solchen Getränkeautomaten.

### STAND DER TECHNIK

Eines der grössten Ärgernisse bei vollautomatischen Kaffeemaschinen ist der Kalk. Zum Einen ist dieser für unterschiedlichste Ausfälle verantwortlich, zum Anderen sind die Entkalkungsprozeduren oftmals so aufwändig, dass nur gut geschultes Personal diese durchführen kann. Meist müssen sogar Servicetechniker eingesetzt werden, welche speziell dafür anreisen oder die Entkalkung im Rahmen eines normalen Service vornehmen. Da die Entkalkung oftmals lange dauert, ergeben sich daraus Wartezeiten, in welchen die zu entkalkenden Maschinen nicht genutzt werden können.

Insbesondere bei Maschinen, die mit einem Festwasseranschluss ausgerüstet sind, ist die Entkalkungsprozedur oftmals aufwändig oder eigentlich gar nicht vorhanden, da in diesen Fällen oftmals Boiler und Ventile einzeln entkalkt oder ausgetauscht werden.

Im Stand der Technik sind bereits diverse Arten der Reinigung bzw. Entkalkung von Kaffeeautomaten beschrieben worden.

Die CH 665945 A5 bildet die Kaffeemaschine so aus, dass eine zuverlässige und rasche Reinigung der zu säubernden Abschnitte der Kaffeemaschine möglich ist. Dazu ist der Brühwassereinlass der Brühkammer wahlweise mit der Brühwasserquelle oder einem Vorratsbehälter für ein flüssiges Reinigungsmittel verbindbar.

Soll die Brühkammer gereinigt werden, so wird sie mit dem Vorratsbehälter für das flüssige Reinigungsmittel verbunden, das fettlösend, geruchfrei und lebensmittelecht sein muss und keinen Nachgeschmack hinterlassen darf. Trotzdem sollte das Reinigungsmittel auch noch eine gewisse Schmierfähigkeit aufweisen. Das Reinigungsmittel bewirkt ein Auflösen der eventuell entstandenen Rückstände an den Wänden und insbesondere auf dem Mikrosieb der Brühkammer. Anschliessend wird die Brühkammer wieder mit der Brühwasserquelle verbunden, wobei die aufgelösten Rückstände und die Reinigungsmittelreste durch mehrfaches Nachspülen der Brühkammer ausgeschwemmt werden.

Der Vorratsbehälter ist zweckmässigerweise an die Brühwasserleitung stromabwärts eines den Auslass der Brühwasserquelle bildenden Brühventils mittels eines Dreiwegeventils angeschlossen. Durch einfaches Umstellen des Dreiwegeventils kann die Brühkammer wahlweise an den Vorratsbehälter für Reinigungsmittel oder an die Brühwasserquelle angeschlossen werden, wobei durch Absperren des Brühventils sichergestellt ist, dass das Reinigungsmittel nicht in den Brühwasserkreislauf innerhalb der Kaffeemaschine gelangen kann oder das Brühwasser in den Vorratsbehälter für das Reinigungsmittel strömt.

Die DE 10 2006 047 969 A1 offenbart eine Vorrichtung zur Zubereitung und Ausgabe von Getränken mit einer Einrichtung zum Einleiten und Durchführen eines Reinigungsvorgangs, bestehend aus zumindest einer Leitung, die zum Transport der Getränke zu einer Getränkeausgabe dient, und Mitteln zum Zuführen eines Reinigers zur zumindest teilweisen Reinigung der einen Leitung und Mitteln zur Erkennung der Dosierung des Reinigers wobei die Mittel zur Erkennung der Dosierung Mittel zum Messen des pH-Wertes umfassen.

Die Mittel zum Zuführen des Reinigers beinhalten einen Mischbehälter für die Aufbereitung eines Reinigungsmediums. Die Mittel zur Erkennung der Dosierung des Reinigers sind im Mischbehälter und/oder stromabwärts des Mischbehälters angeordnet, während der Mischbehälter selbst austauschbar angeordnet ist.

Die EP 2 078 481A1 beschreibt ein Reinigungsmodul für Maschinen zur Herstellung flüssiger Lebensmittel, insbesondere für Kaffeemaschinen, umfassend mindestens einen Reinigungsmittelbehälter zur Aufnahme von Reinigungsmittel, mindestens eine Dosiervorrichtung mit einem Steueranschluss und mindestens eine Ausgabekammer, wobei die Dosiervorrichtung derart mit dem Reinigungsbehälter und der Ausgabekammer verbunden ist, dass Reinigungsmittel mittels der Dosiervorrichtung aus dem Reinigungsmittelbehälter in die Ausgabekammer förderbar ist. Reinigungsmittelbehälter, Dosiervorrichtung und Ausgabekammer bilden dabei eine bauliche Einheit und sind insbesondere in einem gemeinsamen Gehäuse angeordnet. Das Gehäuse weist einen an der Oberseite angeordneten Tragegriff auf. Vorzugsweise ist das Reinigungsmodul als Einschubmodul ausgebildet, wobei insbesondere an dem Reinigungsmodul an einer Vorderseite mindestens ein Griff zum Einschieben und Herausziehen des Reinigungsmoduls ausgebildet ist.

Die WO 2009124786 A1 offenbart eine Vorrichtung zur Zubereitung von Getränken mit einem hydraulischen Kreis, der einen Wasserbehälter, eine Wasserpumpe, eine im Kreis angeordnete Aufheizeinrichtung zur Aufheizung des darin zirkulierenden Wassers, und ein Getränkeerzeugungsmodul umfasst, die so miteinander verbunden sind, dass Wasser aus dem Wasserbehälter zum Getränkeerzeugungsmodul fliessen kann. Im Kreis ist stromabwärts vom Wasserbehälter ein Entkalkungssystem angeordnet mit einem speziellen Aufnahmeraum zur Aufnahme einer vorbestimmten Dosis eines lösbaren/aufschwemmbaren Entkalkungsmittels sowie einem Wassereinlass und einem Wasserauslass zum Durchströmen des Aufnahmeraums mit Wasser.

Die WO 2012035247 A1 beschreibt eine Speichervorrichtung für eine selbstreinigende Kaffeemaschine, die einen Rahmen umfasst mit einem herausnehmbaren Träger und Mitteln zum Befestigen eines Behälters für eine Reinigungsflüssigkeit, wobei der Träger Mittel zur Entnahme der Reinigungsflüssigkeit aufweist und zwischen einer Speicherposition, in welcher er sichtbar in die Maschine integriert ist, und einer herausgezogenen Position, in welcher der Behälter mit dem Träger verbunden oder vom Träger abgenommen werden kann, hin- und her bewegbar ist.

Die WO 2013023963 A1 offenbart einen Getränkespender, der eine starre mechanische Kopplungsvorrichtung für eine Kartusche mit Reinigungsmittel aufweist. Die Kopplungsvorrichtung stellt eine wiederholbare und immer dieselbe relative Position der Kartusche gegenüber dem Getränkespender her. Sie gewährleistet, dass die Kartusche als Behälter für das Reinigungs- und/oder Entkalkungsmittel immer dieselbe Position zum Gerät einnimmt. Mechanische Bestandteile der Kopplungsvorrichtung schaffen eine zuverlässige, stabile und nicht versehentlich lösbare Kopplung zwischen dem Getränkespender und der Kartusche, beispielsweise durch einen Schraub-, Bajonett-, Klick- oder Rastverschluss.

Diese Lösung wendet sich davon ab, den Benutzer das Reinigungsmittel in einer kaum überprüfbaren Menge bzw. Dosierung zuführen zu lassen. Sofern es als Tablette zugegeben wird, kann zwar von immer derselben Dosierung bzw. Menge ausgegangen werden. Hat der Benutzer jedoch beispielsweise ein pulverförmiges oder flüssiges Reinigungsmittel zuzugeben, ist nicht sichergestellt, dass er es vollständig zuführt. Ausserdem kann nicht mit Sicherheit davon ausgegangen werden, dass er das korrekte Mittel wählt. Die beschriebene Lösung verfolgt daher das Prinzip, mit einer Kopplungsvorrichtung für eine starre, mechanische Kopplung zwischen dem Getränkespender und der Kartusche die Zugabe eines nach Art und Menge genau definierten Reinigungsmittels sicherzustellen bzw. zu erzwingen. Damit lässt sich nicht nur ein wesentlich genauer definierter Reinigungs- bzw. Entkalkungsvorgang durchführen. Vielmehr wird auch die Einleitung des Reinigungsmittels gezielt an derjenigen Stelle ermöglicht, an der auch ein Reinigungs- bzw. Entkalkungsbedarf besteht.

Die Kopplung umfasst allerdings auch eine mechanische Kopplung zwischen einem im Getränkespender angeordneten Antrieb und einer in der Kartusche angeordneten Pumpe. Das System und die Kartusche sind daher ausserordentlich aufwändig und mechanisch komplex.

Aus der WO 2013057071 A1 ist eine Kaffeemaschine, insbesondere Kaffeevollautomat, bekannt, umfassend einen Wassertank, eine Heizeinrichtung zum Aufheizen von Wasser, eine Brüheinheit zum Auslaugen von gemahlenen Kaffeebohnen mittels des von der Heizeinrichtung erhitzten Wassers, ein mindestens eine Wasserleitung umfassendes Wasserleitungssystem sowie eine Förderpumpe zum Fördern von Wasser aus dem Wassertank durch das Wasserleitungssystem. Es ist eine Kammer für eine chemische Wirksubstanz, insbesondere ein Entkalkungs- und/oder Reinigungsmittel, vorgesehen oder vorsehbar, die an das Wasserleitungssystem derart manuell oder automatisch, anschliessbar und/oder zuschaltbar ist, das Wasser aus dem Wassertank mittels der Förderpumpe durch die Kammer in das Wasserleitungssystem förderbar ist. Insbesondere ist die Kammer fest in die Kaffeemaschine integriert oder alternativ als Behälter entnehmbar, insbesondere austauschbar, oder zwischen zwei Positionen verstellbar angeordnet.

FR 2873011 offenbart eine Kaffeemaschine zur Herstellung von Kaffee aus Kaffeepads. Sie umfasst einen beweglichen Schlitten mit Siebtrichtern zur Aufnahme der Kaffeepads, mit einer Ladeposition, einer Brühposition und einer Entnahmeposition. In der Brühposition fliesst heisses Wasser über einen Einspritzblock durch das Kaffeepad und den Siebtrichter zu einem Ausgusstrichter.

DE 102011081010 A1 offenbart einen Getränkespender für Haushaltszwecke, mit einer Reinigungseinrichtung zur Durchführung eines Reinigungs- und/oder Entkalkungsvorgangs, mit einer starren mechanischen Kopplungsvorrichtung für eine Kartusche mit Reinigungsmittel. Nach dem Einsetzen einer Reinigerkartusche in die mechanische Kopplungsvorrichtung wird der Innenraum der Kartusche fluidisch mit dem Leitungssystem des Getränkespenders verbunden.

GB 2506940 A offenbart eine Getränkeausgabemaschine, die ein Gehäuse aufweist, das eine Aufnahme zum Aufnehmen einer ausdehnbaren Kartusche bereitstellt, die so in die Maschine eingekoppelt ist, dass sie eine Wasserladung aufnehmen kann. Es ist ein Knetsystem vorgesehen, das aktiviert wird und mechanisch auf die Aussenseite einer Patrone innerhalb des Behälters einwirkt, nachdem Wasser in die Patrone gelangt ist.

### DARSTELLUNG DER ERFINDUNG

Es ist daher eine Aufgabe der Erfindung, einen Getränkeautomaten anzugeben, der sich besonders leicht und bedienungsfreundlich an vor Ort bestehende Wasserqualitäten anpassen, insbesondere entkalken lässt.

Es ist weiterhin eine Aufgabe der Erfindung, ein vereinfachtes Verfahren zum Betriebe eines solchen Getränkeautomaten bereitzustellen.

Diese und andere Aufgaben werden durch die Merkmale der Ansprüche 1 und 17 gelöst.

Die Erfindung geht aus von einem Getränkeautomaten, insbesondere einer Kaffeemaschine, welcher unter Zufuhr von Wasser über einen Festwasseranschluss zu einem im Getränkeautomaten angeordneten Hydraulikteil ein Getränk zubereitet und an einem Auslass des Getränkeautomaten ausgibt. Die Erfindung ist dadurch gekennzeichnet, dass an dem Getränkeautomaten eine von aussen zugängliche Kartuschenaufnahme vorgesehen ist, in die eine Kartusche austauschbar eingesetzt werden kann, welche Kartusche einen zulaufseitigen Kartuschenanschluss und einen ablaufseitigen Kartuschenanschluss aufweist, über die im eingesetzten Zustand der Kartusche über den Festwasseranschluss dem Getränkeautomaten zugeführtes Wasser durch die Kartusche strömt und dabei gefiltert und/oder mit Zusatzstoffen angereichert wird, wobei die Kartuschenaufnahme eine Umschalteinrichtung umfasst, welche bei einer nicht eingesetzten Kartusche den Festwasseranschluss hydraulisch mit dem Hydraulikteil verbindet (A) und bei eingesetzter Kartusche das Wasser teilweise oder ganz durch die Kartusche umleitet (B).

Gemäss einer Ausgestaltung der Erfindung ist die Kartuschenaufnahme an der Vorderseite des Getränkeautomaten angeordnet.

Eine andere Ausgestaltung der Erfindung ist dadurch gekennzeichnet, dass im Getränkeautomaten zwischen dem Festwasseranschluss und dem Hydraulikteil eine Wasserpumpe vorgesehen ist, und dass die Kartuschenaufnahme derart ausgebildet ist, dass die eingesetzte Kartusche von Wasser durchströmt wird, welches von der Wasserpumpe zum Hydraulikteil gepumpt wird.

Eine wieder andere Ausgestaltung der Erfindung ist dadurch gekennzeichnet, dass in die Kartuschenaufnahme Kartuschen unterschiedlicher Funktion und/oder Grösse einsetzbar sind.

Insbesondere können die Kartuschen jeweils mit einem Codierelement versehen sein, welches für die jeweilige Funktionalität und Grösse der Kartusche charakteristisch ist.

Insbesondere können die Codierelemente mechanisch, optisch, hochfrequenztechnisch oder magnetisch lesbar bzw. auslesbar ausgebildet sein. Generell kann die Erkennung, dass eine Kartusche vorhanden ist bzw. was für eine Kartusche vorhanden ist, mechanisch detektiert werden, z.B. mittels Stiften an der Kartusche über einen oder mehreren Mikroswitches an der Maschine.

Speziell können die Codierelemente als RFIDs ausgebildet sein.

Es ist aber auch denkbar, dass die Codierelemente einen ein- oder zweidimensionalen optischen Code enthalten.

Insbesondere können am Getränkeautomaten Mittel zum Lesen bzw. Auslesen der auf den Kartuschen angebrachten Codierelemente vorgesehen sein, und es können die Mittel zum Lesen bzw. Auslesen der auf den Kartuschen angebrachten Codierelemente mit einer Steuerung des Getränkeautomaten verbunden sein. Je nach Kartusche führt die Maschine dann unterschiedliche Funktionen aus. Zum Beispiel erkennt die Maschine, ob es sich um eine Kartusche für eine Jahresentkalkung oder für eine monatliche Entkalkung handelt. Die Maschine könnte zum Beispiel auch erkennen, ob die Kartusche mit Entkalkungsmittel gefüllt ist, oder ob sie bereits leer ist. Des weitern könnte die Maschine erkennen, ob es sich um eine Entkalkungskartusche oder um einen Filter handelt.

Speziell können die Mittel zum Lesen bzw. Auslesen der auf den Kartuschen angebrachten Codierelemente an der Kartuschenaufnahme angeordnet sein.

Eine andere Ausgestaltung der Erfindung ist dadurch gekennzeichnet, dass die Kartuschen als Entkalkungskartuschen ausgebildet sind und einen Innenraum aufweisen, in welchem Entkalkungsmittel untergebracht ist.

Die Kartuschen können aber auch als Filterkartuschen ausgebildet sein und einen Innenraum aufweisen, in welchem ein Filter für das durchströmende Wasser untergebracht ist.

Eine weitere Ausgestaltung der Erfindung ist dadurch gekennzeichnet, dass in der Kartuschenaufnahme ein Schaltelement angeordnet ist, welches mit einer Steuerung des Getränkeautomaten verbunden ist und beim Einsetzen einer Kartusche automatisch betätigt wird.

Eine andere Ausgestaltung der Erfindung ist dadurch gekennzeichnet, dass die Kartuschen in die Kartuschenaufnahme verriegelbar oder einrastbar eingesetzt werden können.

Eine weitere Ausgestaltung der Erfindung ist dadurch gekennzeichnet, dass Mittel zum Überwachen der Wasserqualität vorgesehen sind, welche mit einer Steuerung des Getränkeautomaten in Verbindung stehen.

Das erfindungsgemässe Verfahren zum Betrieb eines Getränkeautomaten nach der Erfindung ist dadurch gekennzeichnet, dass beim Einsetzen einer Kartusche in die Kartuschenaufnahme das vom Festwasseranschluss kommende Wasser automatisch teilweise oder ganz in die Kartusche umgeleitet wird und dass beim Herausnehmen der Kartusche die Umleitung automatisch rückgängig gemacht wird.

Eine Ausgestaltung des erfindungsgemässen Verfahrens ist dadurch gekennzeichnet, dass das Einsetzen einer Kartusche in die Kartuschenaufnahme einer Steuerung des Getränkeautomaten signalisiert wird, und dass die eingesetzte Kartusche am Getränkeautomaten optisch angezeigt wird.

Insbesondere kann die Art der eingesetzten Kartusche automatisch detektiert werden, und automatisch ein Entkalkungsprogramm gestartet und durchgeführt wird, wenn die eingesetzte Kartusche eine Entkalkungskartusche ist.

Eine andere Ausgestaltung des erfindungsgemässen Verfahrens ist dadurch gekennzeichnet, dass der Verkalkungszustand des Hydraulikteils fortlaufend überwacht wird, und dass am Getränkeautomaten angezeigt wird, wenn ein Entkalkungsprogramm notwendig ist bzw. eine Entkalkungskartusche in die Kartuschenaufnahme eingesetzt werden soll.

Eine weitere Ausgestaltung des erfindungsgemässen Verfahrens ist dadurch gekennzeichnet, dass im Normalbetrieb des Getränkeautomaten in die Kartuschenaufnahme eine Filterkartusche eingesetzt ist, und dass die Filterkartusche gegen eine Entkalkungskartusche ausgetauscht wird, wenn die Notwendigkeit einer Entkalkung besteht.

Eine besonders geeignete Kartusche für einen Getränkeautomaten nach der Erfindung ist dadurch gekennzeichnet, dass die Kartusche zulaufseitig und ablaufseitig jeweils mit einem Rückschlagventil versehen ist, welche zum Durchführen eines Entkalkungsvorgangs geöffnet werden können.

Erfindungsgemäss kann das zulaufseitige Rückschlagventil durch das zulaufseitig anstehende Wasser hydraulisch geöffnet werden.

Das ablaufseitige Rückschlagventil kann dann durch das durch die Kartusche strömende Wasser hydraulisch geöffnet werden.

Es ist aber auch denkbar, dass das ablaufseitige Rückschlagventil durch ein von aussen eingreifendes Betätigungselement mechanisch geöffnet werden kann.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in der Frontansicht eine schematische Darstellung eines beispielhaften Kaffeeautomaten mit einer an der Frontseite angeordneten Kartuschenaufnahme gemäss einem Ausführungsbeispiel der Erfindung;
- Fig. 2: ein stark vereinfachtes Schema des inneren Aufbaus eines Getränkeautomaten gemäss einem Ausführungsbeispiel der Erfindung;
- Fig. 3: ein beispielhaftes Schema für das Einsetzen einer Entkalkungskartusche in einem Getränkeautomaten gemäss einem weiteren Ausführungsbeispiel der Erfindung;
- Fig. 4: eine zu Fig. 3 vergleichbare Darstellung für das Einsetzen einer Filterkartusche;
- Fig. 5: eine mit gegenläufigen Rückschlagventilen ausgestattete Kartusche für einen Getränkeautomaten nach der Erfindung (Fig. 5a), die beim Einsetzen eingangsseitig hydraulisch und ausgangsseitig mechanisch geöffnet werden (Fig. 5b); und
- Fig. 6: eine mit gleichgerichteten Rückschlagventilen ausgestattete Kartusche für einen Getränkeautomaten nach der Erfindung, die beim Einsetzen eingangsseitig und ausgangsseitig hydraulisch geöffnet werden.

### WEGE ZUR AUSFÜHRUNG DER ERFINDUNG

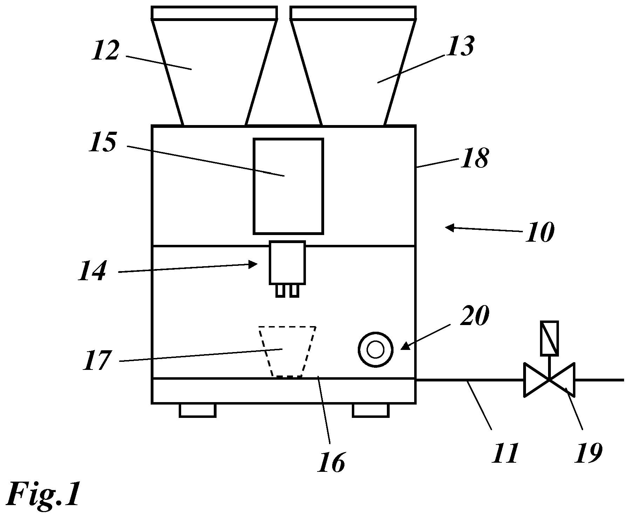

Fig. 1 zeigt in der Frontansicht eine schematische Darstellung einer beispielhaften Kaffeemaschine 10 mit Festwasseranschluss 11 gemäss einem Ausführungsbeispiel der Erfindung. Die Kaffeemaschine 10 ist in einem Gehäuse 18 untergebracht. Oben auf dem Gehäuse 18 sind trichterförmige Bohnenbehälter 12, 13 angeordnet, die mit Kaffeebohnen für die darunter befindlichen Mahlwerke gefüllt werden. Es ist jedoch auch möglich, dass die Kaffeemaschine stattdessen mit gemahlenem losem Kaffeepulver oder mit in Kapseln abgefülltem Kaffeepulver betrieben wird.

An der Frontseite des Gehäuses 18 ist in üblicher Weise eine meist kombinierte Bedien/Anzeigeeinheit 15 vorgesehen, über die mittels nicht dargestellter Tasten oder über eine Touchscreen Steuerbefehle und Getränkewünsche eingegeben werden können, und auf der bestimmte Zustände und Abläufe der Maschine visualisiert werden. Unter der Bedien/Anzeigeeinheit 15 ist ein Auslass 14 angeordnet, über den das gewählte Getränk und gegebenenfalls Zusätze wie Milch, Milchschaum oder ein aromatisierender Zusatzstoff (Sirup) in ein darunter auf einer Stellfläche 16 stehendes Gefäss (Becher) 17 ausgegeben werden. Für die Bereitstellung der Zusätze können der Kaffeemaschine 10 in Fig. 1 nicht dargestellte Zusatzgeräte beigestellt sein, die Milch in gekühlter Form oder verschiedene Arten von Aromazusätzen abgeben.

Ebenfalls auf der Frontseite des Gehäuses 18 ist in diesem Beispiel eine Kartuschenaufnahme 20 angeordnet, in die eine Kartusche für die Entkalkung der Maschine oder die Filterung des Wassers eingesetzt werden kann, das der Kaffeemaschine 10 über einen Festwasseranschluss 11 zugeführt wird, in dem üblicherweise ein Hauptwasserventil 19 angeordnet ist. Die Anordnung der Kartuschenaufnahme 20 an der Frontseite hat den Vorteil, dass auf beiden Seiten der Maschine Zusatzmodule für Milch und/oder Aromazusätze oder Tassenwärmer oder dgl. zugestellt werden können, ohne den Zugang zur Kartuschenaufnahme 20 zu erschweren oder zu verhindern.

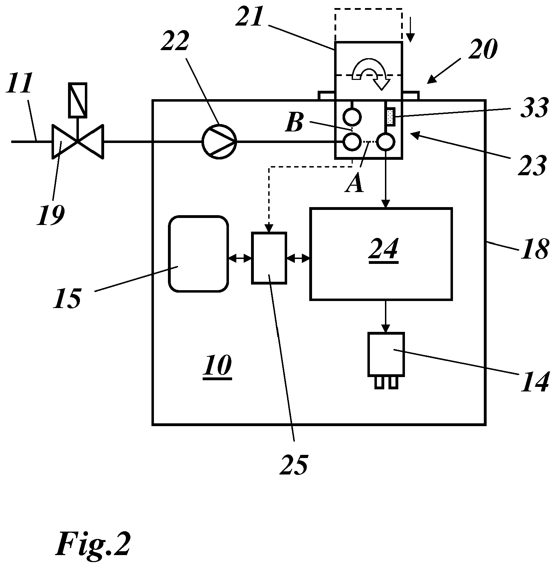

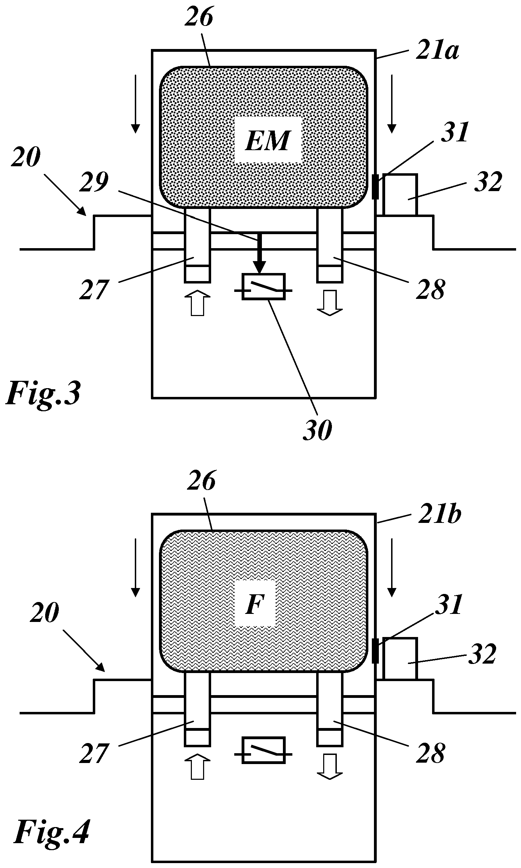

Für die Entkalkung ist ein Entkalkungsmittel (EM in Fig. 3) vorgesehen, das - wie bereits erwähnt - in einer Art Kartusche geliefert wird. Diese Kartusche (21 in Fig. 2, 21a in Fig. 3, 21b in Fig. 4) ist so gestaltet, dass sie über einen Zuführ- und Abführkanal verfügt (ähnlich einem Wasserfilter), die gemäss Fig. 3 und 4 über einen zulaufseitigen Kartuschenanschluss 27 und einen ablaufseitigen Kartuschenanschluss 28 zugänglich sind.

Gemäss Fig. 3 ist im Innenraum 26 der Entkalkungskartusche 21 ein Entkalkungsmittel EM vorhanden. Das Entkalkungsmittel EM kann sowohl flüssig, als auch pulverförmig sein oder auch in Tablettenform vorliegen. Die Entkalkungskartusche 21 a (wie auch die Filterkartusche 21b der Fig. 4) ist vorzugsweise so gestaltet, dass sie mit einer Art Gewinde oder einem ähnlichen Schnellverschluss (Bajonettverschluss oder einrastender Steckverschluss) mit der Maschine wasserdicht verbunden werden kann. Die Kartuschenanschlüsse 27 und 28 können dabei männlich (wie in Fig. 3, 4) oder weiblich ausgebildet sein. Sie können nebeneinander angeordnet sein (wie in Fig. 3, 4) oder konzentrisch ineinander, um ein Eindrehen der Kartusche zu erleichtern.

Die Kaffeemaschine 10 verfügt über die Kartuschenaufnahme 20 als Schnittstelle, die einfach von vorne zugänglich ist und bei der diese Kartusche eingeschraubt resp. verbunden werden kann. Die Kartuschenaufnahme 20 ist in die Wasserstrecke eingeschaltet, die gemäss Fig. 2 von dem Festwasseranschluss 11 über eine Wasserpumpe 22 zu einem Hydraulikteil 24 des Getränkeautomaten 10 führt. An den Hydraulikteil 24 ist der Auslass 14 für die Ausgabe des fertigen Getränks angeschlossen. Die Kartuschenaufnahme 20 weist eine Umschalteinrichtung 23 auf, die zwischen einer direkten hydraulischen Verbindung zwischen Wasserpumpe 22 und dem Hydraulikteil 24 über den Pfad A und einer Umleitung des Wassers durch die Kartusche 21 über den Pfad B umschalten kann. Die Umschalteinrichtung 23 kann rein mechanisch funktionieren, kann aber auch mit steuerbaren Ventilen ausgestattet sein, die in einer bestimmten Abfolge öffnen und schliessen.

Mit dem Einsetzen (Einschrauben) der Kartusche 21 bzw. 21a,b wird zum Einen die Kartusche, d.h. der Zugang zum Innenraum 26, geöffnet, zum Anderen wird der Wasserpfad ganz oder teilweise durch die Kartusche umgeleitet. Dies ist in Fig. 2 durch den Blockpfeil in der Kartusche 21 angedeutet. Für die vollständige Umleitung wird die direkte Verbindung A unterbrochen und der Umleitungspfad B aktiviert.

Zum Entkalken wird die Kartusche 21a - wie bereits gesagt - direkt nach der Wasserpumpe 22 in den Wasserkreis eingebracht, so dass alle nachfolgenden Elemente, insbesondere des Hydraulikteils 24, wie Boiler, Ventile, Leitungen etc. mit dem Entkalkungsmittel EM gespült werden. Die Kartusche 21a ist so gestaltet, dass das Wasser, welches durch die Wasserpumpe 22 in die Kartusche 21a gedrückt wird, das Entkalkungsmittel (Entkalkungsflüssigkeit) sicher aus der Kartusche 21a drückt. Mit dem Verbinden der Kartusche 21a und der Kaffeemaschine 10 wird automatisch die Entkalkungsprozedur gestartet. Dies kann beispielsweise dadurch geschehen, dass gemäss Fig. 3 in der Kartuschenaufnahme 20 ein Schaltelement 30 in Form eines Mikroschalters oder Reedelements angeordnet ist, dass beim Einsetzen der Kartusche 21 bzw. 21a,b von einem Betätigungselement 29 mechanisch betätigt (Mikroschalter) oder mittels eines Magneten an der Kartusche geschaltet wird (Reedelement). Das Schaltelement 30 kann gemäss Fig. 2 über eine (gestrichelt eingezeichnete) Leitung mit der Steuerung 25 der Kaffeemaschine 10 verbunden sein und die Steuerung 25 direkt veranlassen, einen vorprogrammierten Entkalkungsprozess einzuleiten und durchzuführen, wenn eine Entkalkungskartusche 21a in die Kartuschenaufnahme 20 eingesetzt worden ist.

Die Größe der Kartusche 21, 21a,b kann unterschiedlich gestaltet werden, so dass auch eine häufigere Entkalkung mit weniger Entkalkungsmittel EM möglich ist. Die Größe der Kartusche ist allenfalls auch abhängig von der Anzahl der vorhandenen Boiler im Hydraulikteil 24. Denkbar wäre auch, dass die Kartuschen 21, 21a,b mit einem Codiersystem, z.B. einer einfachen Farbcodierung oder einem an der Kartusche 21, 21a,b angebrachten Codierelement 31 in Form eines RFIDs oder eines (eindimensionalen) Strichcodes oder eines (zweidimensionalen) QR-Codes oder dgl. ausgerüstet sind, so dass die Maschine merkt welche Kartusche montiert ist. Insbesondere können an der Kartusche 21, 21a,b angebrachte Codierelemente 31 von einer Abfragevorrichtung 32 gelesen oder ausgelesen werden, die beispielsweise direkt an der Kartuschenaufnahme 20 angeordnet ist (Fig. 3, 4) und optisch, hochfrequenztechnisch oder magnetisch auf das Codierelement 31 zugreifen kann.

Die Codierung kann sowohl dazu verwendet werden, sicherzustellen, dass die geeignete und für den angestrebten Zweck vorgesehene Kartusche verwendet wird, als auch (z.B. bei der RFID-Variante), dass eine Kartusche 21, 21a,b nur einmal verwendet wird. Denkbar ist auch, dass die Kaffeemaschine 10 mit zusätzlicher Sensorik in ihrer Steuerung 25 erkennt, wann eine Entkalkung nötig ist und dies dem Benutzer automatisch mitteilt. Messbar wäre dies z.B. über die Steilheit des Temperaturanstiegs T(t) beim Aufheizen eines im Hydraulikteil 24 befindlichen Boilers, wobei die Aufheizkurve umso steiler ist, je weniger verkalkt die eingebauten Heizwendel sind.

Anstelle der Entkalkungspatrone 21a der Fig. 3 kann die Schnittstelle bzw. Kartuschenaufnahme 20 auch zum Anschliessen bzw. Einfügen eines Wasserfilters in Form einer Filterkartusche 21b genutzt werden (Fig. 4). Die Filterkartusche 21b hat in ihrem Innenraum 26 einen Filter F, der mit dem Wasser transportierte Teilchen oder Fremdstoffe wie Sand, Rost oder dgl. ausfiltert und festhält.

Die Filterkartusche 21b kann insbesondere für den Normalbetrieb der Kaffeemaschine 10 dauerhaft in die Kartuschenaufnahme 20 eingesetzt sein und nur für das Durchlaufen eines Entkalkungsprogramms zeitweise durch eine Entkalkungskartusche 21a ersetzt werden.

Die Schnittstelle zum Anschliessen der Kartusche, die Kartuschenaufnahme 20, kann zusätzlich mit einem ph-Wert-Sensor 33 (Fig. 2) ausgerüstet sein, über den erkannt wird, ob der Filter F in der vorgeschalteten Filterkartusche 21b am Ende seiner Lebensdauer ist, bzw. über den der Kalkgehalt des Wassers laufend kontrolliert wird und mithilfe dieser Information in der Steuerung 25 errechnet wird, wann eine Entkalkung nötig ist.

Die Steuerung 25 steuert einerseits die steuerbaren Elemente im Hydraulikteil 24 und erhält von dort Rückmeldungen über Temperaturen, Drücke, Stellungen der Mechanik im Brühteil etc.. Andererseits ist die Steuerung 25 mit der Bedien/Anzeigeeinheit 15 verbunden und enthält von dort Steuerbefehle bzw. bringt dort Informationen zur Anzeige. Hierzu gehören Informationen über Art der eingesetzten Kartuschen, einen notwendigen Kartuschenwechsel, über die Notwendigkeit der Entkalkung und die verschiedenen Phasen im Entkalkungsprogramm.

Das Einsetzen einer Kartusche 21, 21a,b in die Kartuschenaufnahme 20 wird somit der Steuerung 25 der Kaffeemaschine signalisiert und die eingesetzte Kartusche 21, 21a,b optisch angezeigt. Da die Art der eingesetzten Kartusche 21, 21 ab automatisch detektiert wird, wird automatisch ein Entkalkungsprogramm gestartet und durchgeführt, wenn die eingesetzte Kartusche eine Entkalkungskartusche 21a ist.

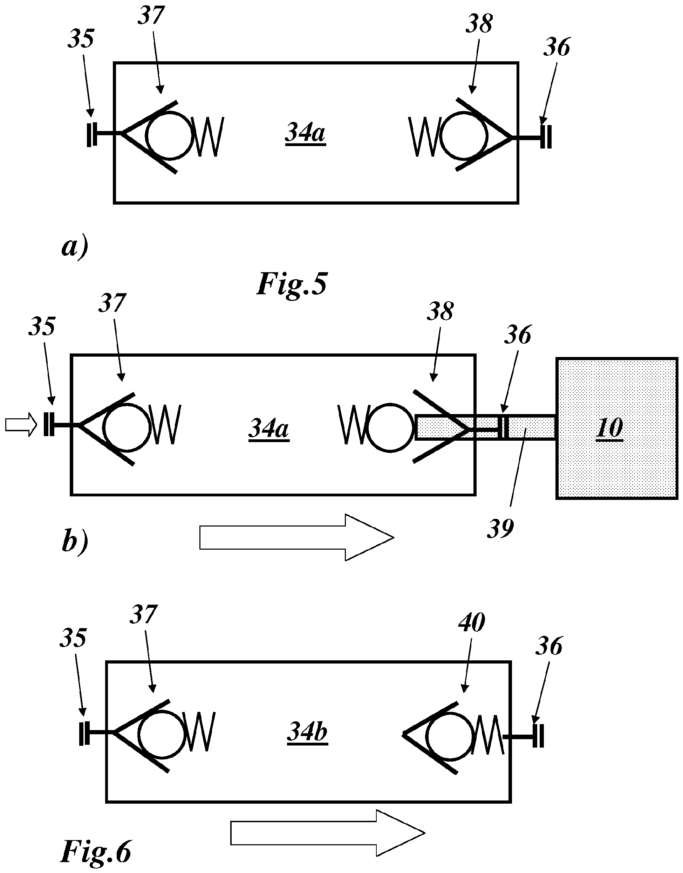

Andere Ausgestaltungen der Kartuschen sind in den Fig. 5 und 6 schematisch wiedergegeben. Fig. 5 zeigt eine mit gegenläufigen Rückschlagventilen 37 und 38 and den Kartuschenanschlüssen 35 (zulaufseitig) und 36 (ablaufseitig) ausgestattete Kartusche 34a für einen Getränkeautomaten nach der Erfindung (Fig. 5a). Wird die Kartusche 34a in die dafür vorgesehene Aufnahme des Getränkeautomaten 10 eingesetzt (Fig. 5b), wird das eingasseitige Rückschlagventil 37 hydraulisch (durch den Wasserdruck, linker Pfeil) geöffnet, während das ausgangsseitige Rückschlagventil 38 beim Einsetzen in die Maschine durch ein Betätigungselement 39 mechanisch geöffnet wird. Das in der Kartusche 34a befindliche Entkalkungsmittel wird mit Wasser aus der Kartusche 34a ausgestossen (unterer Pfeil). Am Ende des Prozesses bleibt Wasser zurück in der Kartusche 34a.

Fig. 6 zeigt eine mit gleichgerichteten Rückschlagventilen 37 und 40 ausgestattete Kartusche 34b für einen Getränkeautomaten nach der Erfindung. Die Rückschlagventile 37 und 40 werden sowohl auf der Eingangsseite wie auf der Ausgangsseite hydraulisch geöffnet. Die Kartusche 34b (wie auch die Kartusche 34a) ist durch die Federbelastung der Ventile gedichtet. Das Entkalkungsmittel wird auch hier mit Wasser aus der Kartusche 34b gestossen, so dass am Ende des Prozesses in der Kartusche Wasser zurück bleibt.

### Bezugszeichenliste

- 10: Kaffeemaschine
- 11: Festwasseranschluss
- 12,13: Bohnenbehälter (Mahlwerk)
- 14: Auslass
- 15: Bedien/Anzeigeeinheit
- 16: Stellfläche
- 17: Gefäss (z.B. Becher)
- 18: Gehäuse
- 19: Hauptwasserventil
- 20: Kartuschenaufnahme
- 21: Kartusche
- 21a: Entkalkungskartusche
- 21b: Filterkartusche
- 22: Wasserpumpe
- 23: Umschalteinrichtung
- 24: Hydraulikteil
- 25: Steuerung
- 26: Innenraum (Kartusche)
- 27: Kartuschenanschluss (Zulaufseite)
- 28: Kartuschenanschluss (Ablaufseite)
- 29: Betätigungselement
- 30: Schaltelement
- 31: Codierelement
- 32: Abfragevorrichtung (optisch, hochfrequenztechnisch, magnetisch etc.)
- 33: pH-Wert-Sensor
- 34a,b: Kartusche
- 35: Kartuschenanschluss (Zulaufseite)
- 36: Kartuschenanschluss (Ablaufseite)
- 37,38: Rückschlagventil
- 39: Betätigungselement
- 40: Rückschlagventil
- EM: Entkalkungsmittel
- F: Filter

## Patentansprüche

1. Getränkeautomat, insbesondere Kaffeemaschine (10), welcher unter Zufuhr von Wasser über einen Festwasseranschluss (11) zu einem im Getränkeautomaten (10) angeordneten Hydraulikteil (24) ein Getränk zubereitet und an einem Auslass (14) des Getränkeautomaten (10) ausgibt, wobei an dem Getränkeautomaten (10) eine von aussen zugängliche Kartuschenaufnahme (20) vorgesehen ist, in die eine Kartusche (21, 21a, 21b, 34a, 34b) austauschbar eingesetzt werden kann, welche Kartusche (21, 21a, 21b, 34a, 34b) einen zulaufseitigen Kartuschenanschluss (27, 35) und einen ablaufseitigen Kartuschenanschluss (28, 36) aufweist, über die im eingesetzten Zustand der Kartusche (21, 21a, 21b, 34a, 34b) über den Festwasseranschluss (11) dem Getränkeautomaten (10) zugeführtes Wasser durch die Kartusche (21, 21a, 21b, 34a, 34b) strömt und dabei gefiltert und/oder mit Zusatzstoffen angereichert wird; **dadurch gekennzeichnet, dass** die Kartuschenaufnahme eine Umschalteinrichtung (23) umfasst, welche bei einer nicht eingesetzten Kartusche den Festwasseranschluss hydraulisch mit dem Hydraulikteil verbindet (A) und bei eingesetzter Kartusche das Wasser teilweise oder ganz durch die Kartusche umleitet (B).

2. Getränkeautomat nach Anspruch 1, **dadurch gekennzeichnet, dass** im Getränkeautomaten (10) zwischen dem Festwasseranschluss (11) und dem Hydraulikteil (24) eine Wasserpumpe (22) vorgesehen ist, und dass die Kartuschenaufnahme (20) derart ausgebildet ist, dass die eingesetzte Kartusche (21, 21a, 21b, 34a, 34b) von Wasser durchströmt wird, welches von der Wasserpumpe (22) zum Hydraulikteil (24) gepumpt wird.

3. Getränkeautomat nach Anspruch 1, **dadurch gekennzeichnet, dass** in die Kartuschenaufnahme (20) Kartuschen (21, 21a, 21b,) unterschiedlicher Funktion und/oder Grösse einsetzbar sind.

4. Getränkeautomat nach Anspruch 3, **dadurch gekennzeichnet, dass** die Kartuschen (21, 21a, 21b, 34a, 34b) jeweils mit einem Codierelement (31) versehen sind, welches für die jeweilige Funktionalität und Grösse der Kartusche (21, 21a, 21b, 34a, 34b) charakteristisch ist.

5. Getränkeautomat nach Anspruch 4, **dadurch gekennzeichnet, dass** die Codierelemente (31) mechanisch, optisch, hochfrequenztechnisch oder magnetisch lesbar bzw. auslesbar ausgebildet sind, insbesondere als RFIDs ausgebildet sind, oder einen ein- oder zweidimensionalen optischen Code enthalten.

6. Getränkeautomat nach Anspruch 5, **dadurch gekennzeichnet, dass** am Getränkeautomaten (10) Mittel (32) zum Lesen bzw. Auslesen der auf den Kartuschen (21, 21a, 21b, 34a, 34b) angebrachten Codierelemente (31) vorgesehen sind, und dass die Mittel (32) zum Lesen bzw. Auslesen der auf den Kartuschen (21, 21a, 21b, 34a, 34b) angebrachten Codierelemente (31) mit einer Steuerung (25) des Getränkeautomaten (10) verbunden sind.

7. Getränkeautomat nach Anspruch 6, **dadurch gekennzeichnet, dass** die Mittel (32) zum Lesen bzw. Auslesen der auf den Kartuschen (21, 21a, 21b, 34a, 34b) angebrachten Codierelemente (31) an der Kartuschenaufnahme (20) angeordnet sind.

8. Getränkeautomat nach Anspruch 1, **dadurch gekennzeichnet, dass** die Kartuschen (21) als Entkalkungskartuschen (21a) ausgebildet sind und einen Innenraum (26) aufweisen, in welchem Entkalkungsmittel (EM) untergebracht ist, oder als Filterkartuschen (21b) ausgebildet sind und einen Innenraum (26) aufweisen, in welchem ein Filter (F) für das durchströmende Wasser untergebracht ist.

9. Getränkeautomat nach Anspruch 1, **dadurch gekennzeichnet, dass** in der Kartuschenaufnahme (20) ein Schaltelement (30) angeordnet ist, welches mit einer Steuerung (25) des Getränkeautomaten (10) verbunden ist und beim Einsetzen einer Kartusche (21, 21a, 21b, 34a, 34b) automatisch betätigt wird.

10. Getränkeautomat nach Anspruch 1, **dadurch gekennzeichnet, dass** die Kartuschen (21, 21a, 21b, 34a, 34b) in die Kartuschenaufnahme (20) verriegelbar oder einrastbar eingesetzt werden können.

11. Getränkeautomat nach Anspruch 1, **dadurch gekennzeichnet, dass** Mittel (33) zum Überwachen der Wasserqualität vorgesehen sind, welche mit einer Steuerung (25) des Getränkeautomaten (10) in Verbindung stehen.

12. Verfahren zum Betrieb eines Getränkeautomaten nach einem der Ansprüche 1 bis 11, **dadurch gekennzeichnet, dass** beim Einsetzen einer Kartusche (21, 21a, 21b, 34a, 34b) in die Kartuschenaufnahme (20) das vom Festwasseranschluss kommende Wasser automatisch teilweise oder ganz in die Kartusche (21, 21a, 21b, 34a, 34b) umgeleitet wird und dass beim Herausnehmen der Kartusche (21, 21a, 21b, 34a, 34b) die Umleitung automatisch rückgängig gemacht wird.

13. Verfahren nach Anspruch 12, **dadurch gekennzeichnet, dass** das Einsetzen einer Kartusche (21, 21a, 21b, 34a, 34b) in die Kartuschenaufnahme (20) einer Steuerung (25) des Getränkeautomaten (10) signalisiert wird, und dass die eingesetzte Kartusche (21, 21a, 21b, 34a, 34b) am Getränkeautomaten (10) optisch angezeigt wird.

14. Verfahren nach Anspruch 13, **dadurch gekennzeichnet, dass** die Art der eingesetzten Kartusche (21, 21a, 21b, 34a, 34b) automatisch detektiert wird, und dass automatisch ein Entkalkungsprogramm gestartet und durchgeführt wird, wenn die eingesetzte Kartusche eine Entkalkungskartusche (21a) ist.

15. Verfahren nach Anspruch 12, **dadurch gekennzeichnet, dass** der Verkalkungszustand des Hydraulikteils (24) fortlaufend überwacht wird, und dass am Getränkeautomaten (10) angezeigt wird, wenn ein Entkalkungsprogramm notwendig ist bzw. eine Entkalkungskartusche (21a) in die Kartuschenaufnahme (20) eingesetzt werden soll.

16. Verfahren nach Anspruch 12, **dadurch gekennzeichnet, dass** im Normalbetrieb des Getränkeautomaten in die Kartuschenaufnahme (20) eine Filterkartusche (21b) eingesetzt ist, und dass die Filterkartusche (21b) gegen eine Entkalkungskartusche (21a) ausgetauscht wird, wenn die Notwendigkeit einer Entkalkung besteht.

17. Kartusche (34a, 34b) für einen Getränkeautomaten nach einem der Ansprüche 1 bis 11, wobei die Kartusche (34a, 34b) zulaufseitig und ablaufseitig jeweils mit einem Rückschlagventil (37 bzw. 38, 40) versehen ist, welche zum Durchführen eines Entkalkungsvorgangs geöffnet werden können;
**dadurch gekennzeichnet, dass** das zulaufseitige Rückschlagventil (37) durch das zulaufseitig anstehende Wasser hydraulisch geöffnet werden kann, sowie das ablaufseitige Rückschlagventil (38) durch das durch die Kartusche (34a) strömende Wasser hydraulisch geöffnet werden kann oder das ablaufseitige Rückschlagventil (40) durch ein von aussen eingreifendes Betätigungselement (39) mechanisch geöffnet werden kann.

## Claims

1. An automatic beverage machine, in particular a coffee machine (10), which by supplying water to a hydraulic component (24) situated in the automatic beverage machine (10) via a fixed water connection (11) prepares a beverage and dispenses it at an outlet (14) of the automatic beverage machine (10), wherein an externally accessible cartridge holder (20) is provided on the automatic beverage machine (10), into which a cartridge (21, 21a, 21b, 34a, 34b) may be replaceably inserted, the cartridge (21, 21a, 21b, 34a, 34b) having a cartridge connection (27, 35) on the feed side and a cartridge connection (28, 36) on the discharge side, via which water that is supplied to the automatic beverage machine (10) via the fixed water connection (11) flows through the cartridge (21, 21a, 21b, 34a, 34b) in the inserted state of the cartridge (21, 21a, 21b, 34a, 34b) and is thereby filtered and/or enriched with additives; **characterized in that** the cartridge holder includes a changeover device (23) that hydraulically connects (A) the fixed water connection to the hydraulic component when a cartridge is not inserted, and partially or completely diverts (B) the water through the cartridge when the cartridge is inserted.

2. The automatic beverage machine according to Claim 1, **characterized in that** a water pump (22) is provided in the automatic beverage machine (10) between the fixed water connection (11) and the hydraulic component (24), and that the cartridge holder (20) is designed in such a way that water that is pumped by the water pump (22) to the hydraulic component (24) flows through the inserted cartridge (21, 21a, 21b, 34a, 34b).

3. The automatic beverage machine according to Claim 1, **characterized in that** cartridges (21, 21a, 21b) having different functions and/or sizes are insertable into the cartridge holder (20).

4. The automatic beverage machine according to Claim 3, **characterized in that** the cartridges (21, 21a, 21b, 34a, 34b) are each provided with a coding element (31) that is characteristic for the particular functionality and size of the cartridge (21, 21a, 21b, 34a, 34b).

5. The automatic beverage machine according to Claim 4, **characterized in that** the coding elements (31) are designed to be read or read out by mechanical, optical, high-frequency, or magnetic means, and in particular are designed as RFIDs or contain a one- or two-dimensional optical code.

6. The automatic beverage machine according to Claim 5, **characterized in that** means (32) for reading or reading out the coding elements (31) affixed to the cartridges (21, 21a, 21b, 34a, 34b) are provided on the automatic beverage machine (10), and that the means (32) for reading or reading out the coding elements (31) affixed to the cartridges (21, 21a, 21b, 34a, 34b) are connected to a controller (25) of the automatic beverage machine (10).

7. The automatic beverage machine according to Claim 6, **characterized in that** the means (32) for reading or reading out the coding elements (31) affixed to the cartridges (21, 21a, 21b, 34a, 34b) are situated on the cartridge holder (20).

8. The automatic beverage machine according to Claim 1, **characterized in that** the cartridges (21) are designed as descaling cartridges (21a) and have an inner chamber (26) in which descaling agent (EM) is accommodated, or are designed as filter cartridges (21b) and have an inner chamber (26) in which a filter (F) for the water flowing through is accommodated.

9. The automatic beverage machine according to Claim 1, **characterized in that** a switching element (30) that is situated in the cartridge holder (20) is connected to a controller (25) of the automatic beverage machine (10) and is automatically actuated upon insertion of a cartridge (21, 21a, 21b, 34a, 34b).

10. The automatic beverage machine according to Claim 1, **characterized in that** the cartridges (21, 21a, 21b, 34a, 34b) may be inserted into the cartridge holder (20) in a lockable or latchable manner.

11. The automatic beverage machine according to Claim 1, **characterized in that** means (33) for monitoring the water quality are provided, which are connected to a controller (25) of the automatic beverage machine (10).

12. A method for operating an automatic beverage machine according to one of Claims 1 to 11, **characterized in that** upon insertion of a cartridge (21, 21a, 21b, 34a, 34b) into the cartridge holder (20), the water coming from the fixed water connection is automatically partially or completely diverted into the cartridge (21, 21a, 21b, 34a, 34b), and the diversion is automatically discontinued when the cartridge (21, 21a, 21b, 34a, 34b) is removed.

13. The method according to Claim 12, **characterized in that** the insertion of a cartridge (21, 21a, 21b, 34a, 34b) into the cartridge holder (20) is automatically signaled to a controller (25) of the automatic beverage machine (10), and that the inserted cartridge (21, 21a, 21b, 34a, 34b) is optically notified on the automatic beverage machine (10).

14. The method according to Claim 13, **characterized in that** the type of the inserted cartridge (21, 21a, 21b, 34a, 34b) is automatically detected, and that a descaling program is automatically started and carried out when the inserted cartridge is a descaling cartridge (21a).

15. The method according to Claim 12, **characterized in that** the scaling level of the hydraulic component (24) is continuously monitored, and that it is displayed on the automatic beverage machine (10) when a descaling program is necessary, or a descaling cartridge (21a) should be inserted into the cartridge holder (20), respectively.

16. The method according to Claim 12, **characterized in that** a filter cartridge (21b) is inserted in the cartridge holder (20) during normal operation of the automatic beverage machine, and that the filter cartridge (21b) is exchanged for a descaling cartridge (21a) when there is a need for descaling.

17. A cartridge (34a, 34b) for an automatic beverage machine according to one of Claims 1 to 11, wherein the cartridge (34a, 34b) is provided with a check valve (37 or 38, 40, respectively) each on the feed side and the discharge side, and the check valves may be opened for carrying out a descaling operation;
**characterized in that** the check valve (37) on the feed side may be hydraulically opened by the water that is present on the feed side, and the check valve (38) on the discharge side may be hydraulically opened by the water flowing through the cartridge (34a), or the check valve (40) on the discharge side may be mechanically opened by an actuating element (39) that engages from the outside.

## Revendications

1. Distributeur de boissons automatique, en particulier une machine à café (10), qui prépare une boisson en alimentant en eau un élément hydraulique (24), situé dans le distributeur de boissons automatique (10), par le biais d'un raccord d'eau fixe (11), et la délivre à une sortie (14) du distributeur de boissons automatique (10), un logement de cartouche (20) accessible de l'extérieur, dans lequel une cartouche (21, 21a, 21b, 34a, 34b) peut être insérée de manière remplaçable, étant prévu au niveau du distributeur de boissons automatique (10), laquelle la cartouche (21, 21a, 21b, 34a, 34b) comporte un raccord côté alimentation (27, 35) et un raccord côté sortie (28, 36), par lesquels l'eau, alimentant le distributeur de boissons automatique (10) par le biais du raccord d'eau fixe (11) lorsque la cartouche (21, 21a, 21a, 34a, 34b) est insérée, s'écoule à travers la cartouche (21, 21a, 21b, 34a, 34b) et est ainsi filtrée et/ou enrichie en additifs ; **caractérisé en ce que** le logement de cartouche comprend un dispositif de commutation (23) qui relie hydrauliquement (A) le raccord d'eau fixe à l'élément hydraulique lorsqu'une cartouche n'est pas insérée et dévie partiellement ou totalement (B) l'eau à travers la cartouche lorsque la cartouche est insérée.

2. Distributeur de boissons automatique selon la revendication 1, **caractérisé en ce qu'**une pompe à eau (22) est prévue dans le distributeur de boissons automatique (10) entre le raccord d'eau fixe (11) et l'élément hydraulique (24) et **en ce que** le logement cartouche (20) est conçu de telle sorte que l'eau qui est pompée par la pompe à eau (22) vers l'élément hydraulique (24) s'écoule à travers la cartouche (21, 21a, 21b, 34a, 34b) insérée.

3. Distributeur de boissons automatique selon la revendication 1, **caractérisé en ce que** des cartouches (21, 21a, 21b) ayant des fonctions et/ou des dimensions différentes peuvent être insérées dans le logement de cartouche (20).

4. Distributeur de boissons automatique selon la revendication 3, **caractérisé en ce que** les cartouches (21, 21a, 21b, 34a, 34b) sont pourvues chacune d'un élément de codage (31) caractéristique de la fonctionnalité et de la taille respective de la cartouche (21, 21a, 21b, 34a, 34b).

5. Distributeur de boissons automatique selon la revendication 4, **caractérisé en ce que** les éléments de codage (31) sont conçus pour être lus ou extraits par des moyens mécaniques, optiques, techniques à haute fréquence ou magnétiques, et en particulier sous forme de RFID, ou contiennent un code optique unidimensionnel ou bidimensionnel.

6. Distributeur de boissons automatique selon la revendication 5, **caractérisé en ce que** des moyens (32) de lecture ou d'extraction des éléments de codage (31) fixés sur les cartouches (21, 21a, 21b, 34a, 34b) sont prévus au niveau du distributeur de boissons automatique (10) et **en ce que** les moyens (32) de lecture ou d'extraction des éléments de codage (31) fixés sur les cartouches (21, 21a, 21b, 34a, 34b) sont reliés à une commande (25) du distributeur de boissons automatique (10).

7. Distributeur de boissons automatique selon la revendication 6, **caractérisé en ce que** les moyens (32) de lecture ou d'extraction des éléments de codage (31) fixés sur les cartouches (21, 21a, 21b, 34a, 34b) sont situés au niveau du logement de cartouche (20).

8. Distributeur de boissons automatique selon la revendication 1, **caractérisé en ce que** les cartouches (21) sont conçues comme des cartouches de détartrage (21a) et comportent une chambre intérieure (26) dans laquelle un agent de détartrage (EM) est logé ou sont conçues comme des cartouches de filtration (21b) et comportent une chambre intérieure (26) dans laquelle est logé un filtre (F) destiné à l'eau qui s'écoule à travers.

9. Distributeur de boissons automatique selon la revendication 1, **caractérisé en ce qu'**un élément de commutation (30) est disposé dans le logement de cartouche (20), lequel élément de commutation est relié à une commande (25) du distributeur de boissons automatique (10) et est actionné automatiquement lors de l'insertion d'une cartouche (21, 21a, 21b, 34a, 34b).

10. Distributeur de boissons automatique selon la revendication 1, **caractérisé en ce que** les cartouches (21, 21a, 21b, 34a, 34b) peuvent être insérées dans le logement de cartouche (20) de manière verrouillable ou encliquetable.

11. Distributeur de boissons automatique selon la revendication 1, **caractérisé en ce que** des moyens (33) de surveillance de la qualité de l'eau sont prévus qui sont reliés à une commande (25) du distributeur de boissons automatique (10).

12. Procédé de fonctionnement d'un distributeur de boissons automatique selon l'une des revendications 1 à 11, **caractérisé en ce que** l'eau provenant du raccord d'eau fixe est déviée automatiquement, de manière partielle ou complète, dans la cartouche (21, 21a, 21b, 34a, 34b) lorsqu'une cartouche (21, 21a, 21b, 34a, 34b) est insérée dans le logement de cartouche (20), et **en ce que** la déviation est automatiquement supprimée lorsque la cartouche (21, 21a, 21b, 34a, 34b) est retirée.

13. Procédé selon la revendication 12, **caractérisé en ce que** l'insertion d'une cartouche (21, 21a, 21b, 34a, 34b) dans le logement de cartouche (20) est signalée à une commande (25) du distributeur de boissons automatique (10), et **en ce que** la cartouche (21, 21a, 21b, 34a, 34b) insérée est affichée visuellement au niveau du distributeur de boissons automatique (10).

14. Procédé selon la revendication 13, **caractérisé en ce que** le type de cartouche (21, 21a, 21b, 34a, 34b) insérée est détecté automatiquement et **en ce qu'**un programme de détartrage est lancé et exécuté automatiquement lorsque la cartouche insérée est une cartouche de détartrage (21a).

15. Procédé selon la revendication 12, **caractérisé en ce que** le niveau d'entartrage de l'élément hydraulique (24) est surveillé en permanence et est affiché au niveau du distributeur de boissons automatique (10) lorsqu'un programme de détartrage est nécessaire ou qu'une cartouche de détartrage (21a) doit être insérée dans le logement de cartouche (20).

16. Procédé selon la revendication 12, **caractérisé en ce qu'**une cartouche de filtration (21b) est insérée dans le logement de cartouche (20) pendant le fonctionnement normal du distributeur de boissons automatique et **en ce que** la cartouche de filtration (21b) est remplacée par une cartouche de détartrage (21a) lorsqu'un détartrage est nécessaire.

17. Cartouche (34a, 34b) destiné à un distributeur de boissons automatique selon l'une des revendications 1 à 11, la cartouche (34a, 34b) étant munie du côté alimentation et du côté sortie d'un clapet anti-retour (37 respectivement 38, 40) qui peuvent être ouvert pour effectuer une opération de détartrage ;
**caractérisée en ce que** le clapet anti-retour côté alimentation (37) peut être ouvert hydrauliquement par l'eau présente du côté alimentation et **en ce que** le clapet anti-retour côté sortie (38) peut être ouvert hydrauliquement par l'eau s'écoulant à travers la cartouche (34a) ou le clapet anti-retour côté sortie (40) peut être ouvert mécaniquement par un élément d'actionnement (39) s'engageant de l'extérieur.
